# FASCICULE DE BREVET EUROPEEN

(11) **EP 4 103 847 B1**
(45) Date de publication et mention de la délivrance du brevet: **24.01.2024**
(21) Numéro de dépôt: 21707330.3
(22) Date de dépôt: 01.02.2021
(51) Int. Cl.: F04D 29/32, B29C 70/24, B29D 99/00, D03D 15/275, F04D 29/02, F01D 21/04, F01D 5/28, D03D 25/00

(54) **TEXTURE FIBREUSE POUR REALISER UNE AUBE DE SOUFFLANTE EN MATERIAU COMPOSITE**
FASERTEXTUR ZUR HERSTELLUNG EINER LÜFTERSCHAUFEL AUS VERBUNDWERKSTOFF
FIBROUS TEXTURE FOR MANUFACTURING A FAN BLADE MADE OF COMPOSITE MATERIAL

(30) Priorité: 10.02.2020 FR 2001304
(43) Date de publication de la demande: 21.12.2022
(73) Titulaire: SAFRAN AIRCRAFT ENGINES, 75015 Paris (FR)
(72) Inventeur: GONDRE, Guillaume Pascal Jean-Charles, 77550 Moissy-Cramayel (FR); POSTEC, Clément Pierre, 77550 Moissy-Cramayel (FR)
(74) Mandataire: Cabinet Beau de Loménie
(86) Numéro de dépôt international: PCT/FR2021/050179
(87) Numéro de publication internationale: WO 2021/160951

(56) Documents cités:
- EP-A1- 3 205 827
- EP-A1- 3 292 991
- FR-A1- 3 082 854
- US-A1- 2013 224 035

## Description

### Domaine Technique

La présente invention se rapporte au domaine général des turbomachines aéronautiques, et concerne plus particulièrement une texture fibreuse destinée à former le renfort fibreux d'une aube de turbomachine en matériau composite. Une telle aube peut être utilisée dans une soufflante de turbomachine aéronautique.

### Technique antérieure

Précédemment réalisées en matériau métallique, les aubes de soufflante, sont maintenant réalisées en matériau composite, c'est-à-dire à partir d'une préforme fibreuse densifiée par une matrice organique, ce qui permet de réaliser des pièces ayant une masse globale moins élevée que ces mêmes pièces lorsqu'elles sont réalisées en matériau métallique tout en présentant une résistance mécanique au moins équivalente sinon supérieure.

Par exemple, les documents US 2013/224035, EP3292991, EP3205827 et FR3082854 décrivent des aubes réalisées en matériau composite.

En fonctionnement, les aubes de soufflante peuvent être amenées à subir des impacts d'objets, notamment d'oiseaux. Lors d'un tel impact, et en particulier lors de l'ingestion d'un oiseau de grande taille, l'aube est généralement fracturée en son milieu. Néanmoins, il est également observé un endommagement critique au niveau de l'échasse de l'aube. Il est important que cet endommagement critique, caractérisé par un endommagement nommé « écaille », qui s'initie en compression engendrant des ruptures de torons en surface, et se propage en cisaillement engendrant de fortes décohésions dans la matrice dans l'épaisseur de la pièce, n'entraîne pas la fracture de l'aube au niveau de son échasse. En effet, une telle fracture engendrerait, par une dissymétrie trop importante du poids dans la turbomachine, un balourd bien plus important qu'une fracture de l'aube en son milieu, qui nuirait au moteur et à ses performances.

Ainsi, il existe un besoin pour une solution permettant d'assurer que l'aube ne se fracture pas dans sa région d'échasse en cas d'impact avec un corps étranger.

### Exposé de l'invention

A cet effet, la présente invention propose une texture fibreuse destinée à former le renfort fibreux d'une aube de turbomachine en matériau composite comprenant un renfort fibreux densifié par une matrice, la texture fibreuse étant en une seule pièce et présentant un tissage tridimensionnel entre une pluralité de fils ou torons de chaîne en au moins des premières fibres présentant un premier allongement à la rupture et s'étendant selon une direction longitudinale et une pluralité de fils ou torons de trame en premières fibres s'étendant selon une direction transverse, la texture comprenant selon la direction longitudinale une partie de pied d'aube, une partie de pale d'aube et une partie d'échasse d'aube entre la partie de pied d'aube et la partie de pale d'aube.

Selon l'invention la texture fibreuse comprend une zone de raideur réduite comprenant des fils ou torons de chaîne en deuxièmes fibres présentant un deuxième allongement à la rupture supérieur au premier allongement à la rupture, la zone de raideur réduite s'étendant dans la direction longitudinale à partir de la zone d'échasse et jusqu'à une hauteur inférieure ou égale à 30 % de la hauteur de l'aube, la zone de raideur réduite s'étendant dans la direction transverse entre une première zone et une deuxième zone, la première zone s'étendant sur une première longueur à partir d'un premier bord de la texture destiné à former un bord d'attaque, et la deuxième zone s'étendant sur une deuxième longueur à partir d'un deuxième bord de la texture destiné à former un bord de fuite.

La présence de la zone de raideur réduite permet de mieux accommoder les contraintes au niveau de la zone susceptible de former une écaille dans le cas de l'ingestion d'un oiseau de grande taille. Ainsi, la zone de raideur réduite permet d'éviter la formation d'une écaille ou du moins de la rendre moins importante qu'en l'absence de cette zone.

Par ailleurs, limiter la présence de la zone de raideur réduite à la seule zone de formation potentielle de l'écaille permet de conserver le reste de l'aube conforme à des aubes décrites précédemment et ainsi de pouvoir utiliser les procédés de fabrication déjà connus pour le reste de l'aube.

Comme précisé ci-dessus, la zone de raideur réduite s'étend jusqu'à une hauteur inférieure ou égale à 30 % de la hauteur de l'aube. Une telle caractéristique permet de limiter la zone de raideur réduite uniquement à la zone où pourrait se former une écaille, et ainsi de ne pas modifier les autres parties de l'aube.

Il faut entendre que la « hauteur de l'aube » est une mesure de longueur définie par ses bornes, à savoir 0 % en bas de la veine aérodynamique de l'aube, et 100 % au sommet de la veine. En d'autres termes, la hauteur totale entre le bas et le haut de la veine aérodynamique de l'aube est ramenée à un pourcentage appelé la hauteur de l'aube, ou hauteur d'aube.

Selon cette définition, la partie de l'aube qui est présente en dessous du bas de la veine aérodynamique de l'aube aussi appelée partie d'échasse est désignée par une hauteur d'aube négative. En d'autres termes, la zone d'échasse peut être définie comme la zone entre le pied de l'aube et une hauteur d'aube de 0 %.

Dans un mode de réalisation la zone de raideur réduite s'étend entre une hauteur d'aube supérieure ou égale à -2% de la hauteur d'aube et une hauteur d'aube inférieure ou égale à 30 % de la hauteur d'aube.

Dans un mode de réalisation la zone de raideur réduite s'étend entre -2% de la hauteur d'aube et 30 % de la hauteur d'aube. Dans un autre mode de réalisation, elle s'étend entre 0 % et 30 % de la hauteur d'aube.

Il est en effet observé lors de nombreux essais réalisés simulant l'ingestion d'un oiseau de grande taille que c'est dans cette zone qu'apparaissent les défauts de type écaille.

Ainsi, il n'est pas nécessaire que la zone de raideur réduite s'étende dans l'intégralité de la partie d'échasse de l'aube, et une zone de raideur réduite à partir d'une hauteur d'aube supérieure ou égale à -2 % permet de réduire la formation d'une écaille.

Dans un mode de réalisation, les fils ou torons de chaîne de deuxièmes fibres sont introduites dans la préforme au cours du tissage de la partie d'échasse. De manière avantageuse, les fils ou torons de deuxièmes fibres sont introduits à une hauteur d'aube correspondant à un épaississement de la préforme. Un procédé de fabrication d'une telle aube est facilité, car les fils ou torons de deuxièmes fibres peuvent alors être introduits dans la préforme sans avoir à remplacer des fils ou torons de premières fibres.

Dans un autre mode de réalisation, la zone de raideur réduite peut s'étendre depuis la partie de pied d'aube et jusqu'à une hauteur inférieur ou égale à 30 % de la hauteur d'aube.

Ce mode de réalisation permet de faciliter le tissage d'une préforme fibreuse, car les fils ou torons de deuxièmes fibres compris dans la zone de raideur réduite peuvent être introduits dans la préforme dès le début du tissage de celle-ci.

Dans un mode de réalisation, il est particulièrement avantageux d'avoir une zone de raideur réduite qui s'étend jusqu'à une hauteur inférieure ou égale à 30 % de la hauteur d'aube puisqu'en effet, à de telles hauteurs d'aube, l'épaisseur de l'aube diminue, si bien que les fils ou torons de deuxièmes fibres compris dans la zone de raideur réduite peuvent être extraits de la préforme à cet endroit afin de faire diminuer l'épaisseur de l'aube, sans devoir être remplacés par l'insertion de premières fibres. Il en résulte un procédé de préparation d'une telle texture particulièrement facilité.

Dans un mode de réalisation, la zone de raideur réduite a un taux volumique de deuxièmes fibres compris entre 25 % et 75 %.

Sans vouloir être liés par la théorie, les inventeurs considèrent qu'un taux volumique de deuxièmes fibres, satisfaisant à la condition énoncée permet d'améliorer efficacement la résistance de l'aube à la formation d'une écaille, dans l'éventualité d'une ingestion d'un oiseau de grande taille, tout en évitant une variation trop brutale de la raideur qui pourrait fragiliser l'aube.

On entend par taux volumique en fils ou torons comprenant des fibres données dans une partie de texture, le rapport entre le volume occupé par les fils ou torons comprenant lesdites fibres et le volume total occupé par tous les fils ou torons dans cette partie. Les fils ou torons peuvent être constitués uniquement par des fibres d'un même matériau. Par « tissage tridimensionnel » ou « tissage 3D », il faut comprendre un mode de tissage par lequel certains au moins des fils de chaîne lient des fils de trame sur plusieurs couches de trame.

Comme précisé ci-dessus, la zone de raideur réduite est comprise entre une première zone et une deuxième zone s'étendant respectivement sur une première longueur et une deuxième longueur.

Dans un mode de réalisation, la première longueur est comprise entre 2 % et 10 % de la longueur de la préforme mesurée dans la direction transverse, et de préférence comprise entre 5 % et 10 % de la longueur de la préforme mesurée dans la direction transverse.

Dans un mode de réalisation, la deuxième longueur est comprise entre 2 et 40 % de la longueur de l'aube mesurée dans la direction transverse. Par exemple, la deuxième longueur est comprise entre 5 % et 35 % de la longueur de la préforme mesurée dans la direction transverse.

Les expressions « direction transverse » et « direction longitudinale » sont ici utilisées avec leurs sens habituels. La direction longitudinale correspond à la direction reliant la partie de la préforme destinée à former le pied de l'aube à la partie de la préforme destinée à former sa tête, et la direction transverse relie la partie de la préforme destinée à former le bord d'attaque et la partie de la préforme destinée à former le bord de fuite de l'aube.

En particulier, on pourra noter que les fils de trame s'étendent dans la direction transverse tandis que les fils de chaîne s'étendent dans la direction longitudinale. On ne sort pas du cadre de l'invention lorsque les fils de trame ou de chaîne ne sont pas strictement alignés avec les directions précitées.

Dans de tels modes de réalisation, la zone de raideur réduite est éloignée à la fois du bord d'attaque et du bord de fuite de l'aube.

La présence des première et deuxième zones permet d'assurer que les zones destinées à former le bord d'attaque et le bord de fuite de l'aube présentent, dans la direction longitudinale, des propriétés mécaniques homogènes le long du bord de fuite ou du bord d'attaque. Il pourrait en effet être préjudiciable à l'aube que ses caractéristiques mécaniques varient dans la direction longitudinale du bord d'attaque ou du bord de fuite, ce que les première et deuxième zones permettent justement d'éviter.

De plus, avoir une première longueur comprise entre 2 % et 10 % de la longueur de la préforme mesurée dans la direction transverse et une deuxième longueur comprise entre 2 % et 40 % de la longueur de la préforme dans la direction transverse permet d'assurer que les première et deuxième zones soient suffisamment larges pour ne pas être sujettes à des concentrations de contraintes trop importantes ce qui pourrait nuire à la résistance mécanique de l'aube dans ses conditions d'utilisation. Par ailleurs, les valeurs maximales des première et deuxième longueurs permettent d'assurer que la zone de raideur réduite soit suffisamment large pour prévenir efficacement l'apparition d'une écaille dans le cas de l'ingestion d'un oiseau de grande taille.

Dans un mode de réalisation, il est préféré que la zone de raideur réduite ne soit présente que sur une épaisseur réduite de la préforme et en peau de celle-ci. En effet, les inventeurs ont constaté que l'écaille qui se forme lors de l'ingestion d'un oiseau de grande taille est généralement localisée sur une couche superficielle de l'aube.

Dans un mode de réalisation, la zone de raideur réduite peut représenter entre 10 % et 50 % de l'épaisseur de la préforme, de préférence entre 10 % et 30 % de l'épaisseur de la préforme.

Dans un mode de réalisation, la zone de raideur réduite est située à la surface de la préforme et est présente du côté de la préforme destiné à être le côté extrados de l'aube.

Dans un mode de réalisation, la zone de raideur réduite représente entre 10 % à 50 % de l'épaisseur de la préforme et est située à la surface de la préforme et est présente du côté de la préforme destiné à être le côté extrados de l'aube.

Un tel mode de réalisation permet de localiser la zone de raideur réduite à l'endroit précis où les contraintes conduisant à la formation ou la propagation d'un défaut de type écaille sont présentes. Une telle disposition permet en outre, sans inconvénient sur la masse, de conserver une raideur suffisante dans l'épaisseur de l'aube en utilisant la raideur plus importante des premières fibres dans le reste de l'aube.

Dans un mode de réalisation, en dehors de la zone de raideur réduite, le taux volumique en premières fibres supérieur ou égal à 80 %, de préférence est supérieur ou égal à 95 %.

Dans un mode de réalisation, en dehors de la zone de raideur réduite, le taux volumique en deuxièmes fibres est inférieur ou égal à 20 %, et de préférence inférieur ou égal à 5 %.

Dans un mode de réalisation, hormis au niveau de la zone de raideur réduite, la texture fibreuse ne comprend que des fils ou torons en premières fibres.

Dans un mode de réalisation, la zone de raideur réduite ne contient pas d'autres fibres que les premières et deuxièmes fibres.

Dans un mode de réalisation, le matériau des premières fibres peut être le carbone.

Dans un mode de réalisation, le matériau des deuxièmes fibres peut être choisi parmi: verre, basalte, aramide, polyester, ou une combinaison de ces matériaux. De préférence, le matériau des deuxièmes fibres est le verre.

Dans un mode de réalisation, le matériau des premières fibres est le carbone, et celui des deuxième fibres est choisi parmi : verre, basalte, aramide, polyester, ou une combinaison de ces matériaux.

Selon un autre de ses aspects, l'invention concerne une aube de soufflante en matériau composite comprenant un renfort fibreux densifié par une matrice, le renfort fibreux de l'aube étant constitué par une texture fibreuse telle que décrite ci-dessus.

Selon un autre de ses aspects, l'invention concerne une turbomachine aéronautique comprenant une soufflante munie d'une pluralité d'aube de soufflante telle que décrite ci-dessus.

Un procédé de fabrication d'une aube de soufflante en matériau composite telle que décrite ci-dessus et comprenant un renfort fibreux densifié par une matrice peut comprendre les étapes suivantes : on réalise une texture fibreuse telle que celle présentée ci-avant, on met en forme ladite texture pour obtenir une préforme d'aube, et on forme une matrice dans la porosité de la préforme pour obtenir l'aube. La texture fibreuse est obtenue par tissage tridimensionnel, et peut présenter par exemple une armure du type interlock. La matrice peut être une matrice organique et obtenue à partir d'une résine. La matrice peut être ainsi formée par moulage par injection de résine (procédé RTM ou « Resin Transfer Molding »).

### Brève description des dessins

[Fig. 1] La figure 1 est une représentation schématique d'une texture fibreuse destinée à former le renfort fibreux d'une aube de turbomachine
[Fig. 2] La figure 2 représente schématiquement un premier mode de réalisation de l'invention.
[Fig. 3] La figure 3 représente schématiquement un autre mode de réalisation de l'invention.
[Fig. 4] La figure 4 représente schématiquement une turbomachine aéronautique selon un mode de réalisation de l'invention.

### Description des modes de réalisation

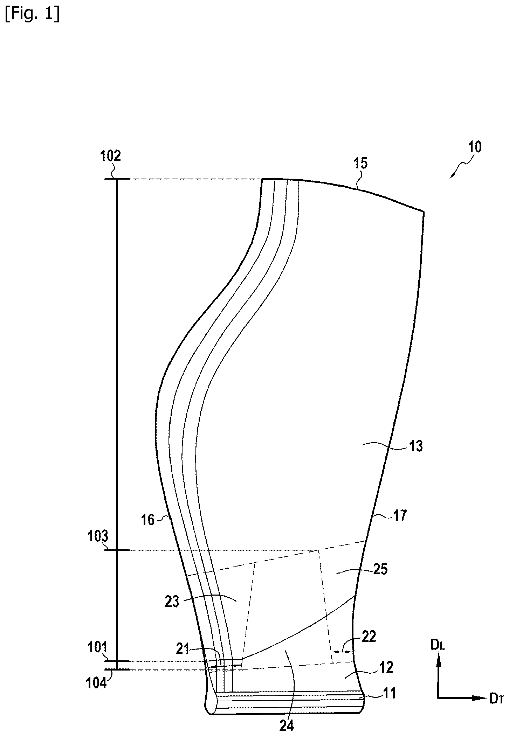

La figure 1 montre une vue schématique d'une texture fibreuse 10 destinée à former le renfort fibreux d'une aube de turbomachine en matériau composite comprenant un renfort fibreux densifié par une matrice. Cette texture fibreuse peut être obtenue par exemple par tissage tridimensionnel dans un métier à tisser de type Jacquard d'une ébauche fibreuse et découpe des fils excédentaires de l'ébauche fibreuse tissée.

La texture fibreuse 10 peut présenter un tissage tridimensionnel, et comprendre par exemple majoritairement une armure interlock ou multicouches. Par « armure interlock », il faut comprendre une armure de tissage tridimensionnel dont chaque couche de fils de chaîne lie plusieurs couches de fils de trame avec tous les fils de la même colonne de chaîne ayant le même mouvement dans le plan de l'armure. Le document WO2006/136755 décrit la réalisation de telles armures de tissage. Comme il sera décrit ultérieurement, cette texture fibreuse pourra être mise en forme puis densifiée pour obtenir une aube de soufflante.

La texture fibreuse 10 s'étend selon une direction longitudinale D_{L} entre une partie de pied d'aube 11, une partie de pale d'aube 13 et le haut de l'aube 15. Une partie d'échasse d'aube 12 est présente entre la partie de pied d'aube 11 et la partie de pale d'aube 13. De façon générale, la partie de pied d'aube 11 est plus épaisse que la partie d'échasse 12 d'aube, et l'épaisseur de la partie de pale d'aube 13 est variable. La texture fibreuse 10 s'étend selon une direction transverse D_{T} entre un premier bord 16 destiné à former le bord d'attaque de l'aube et un deuxième bord 17 destiné à former le bord de fuite de l'aube.

La partie d'échasse d'aube 12 assure la transition en épaisseur entre la partie de pied d'aube 11 et la partie de pale d'aube 13. La partie d'échasse d'aube 12 s'étend, dans l'exemple illustré, sur une distance mesurée selon la direction longitudinale moins importante au niveau du premier bord 16 qu'au niveau du deuxième bord 17.

Conformément à l'invention, comme figuré sur la figure 1, la partie d'échasse d'aube 12 comporte une première zone 23 qui s'étend selon la direction transverse sur une première longueur 21 entre le premier bord 16 et la zone de raideur réduite 24 et une deuxième zone 25 qui s'étend selon la direction transverse sur une deuxième longueur 22 entre le deuxième bord 17 et la zone de raideur réduite 24. En d'autres termes, la zone de raideur réduite 24 est située, dans la direction transverse entre la première zone 23 et la deuxième zone 25.

Dans un mode de réalisation, la première zone 23 et la deuxième zone 25 comprennent des taux volumiques en premières fibres égaux.

Conformément à l'invention, la zone de raideur réduite 24 comprend des fils ou torons de chaîne en deuxièmes fibres différentes des premières fibres, les deuxièmes fibres présentant un allongement à la rupture strictement supérieur à celui des premières fibres.

Dans un mode de réalisation, la zone de raideur réduite 24 présente un premier taux volumique en fils ou torons en deuxièmes fibres strictement supérieur au taux volumique en fils ou torons en deuxièmes fibres dans la première zone 23 et la deuxième zone 25, que ces derniers soient égaux ou non. En d'autres termes, il y a plus de fils ou torons de chaîne en deuxièmes fibres par rapport au nombre total de fils ou torons dans la zone de raideur réduite 24 que dans la première 23 ou la deuxième zone 25.

Dans un mode de réalisation, la première zone 23 et la deuxième zone 25 comprennent des taux volumiques de deuxièmes fibres égaux, et de préférence inférieurs à 20 %, voire inférieurs à 5 %.

Dans un mode de réalisation, il est ménagé une première zone de transition, non figurée, s'étendant dans la direction transverse entre la première zone 23 et la zone de raideur réduite 24 et comprenant un taux volumique en deuxièmes fibres compris entre celui de la première zone 23 et celui de la zone de raideur réduite 24.

Une telle première zone de transition présente des propriétés mécaniques entre celles de la première zone 23 et celle de la zone de raideur réduite 24 qui permet d'éviter une variation brutale des propriétés mécaniques susceptible de créer des zones à évolution de raideur trop forte pouvant nuire à l'intégrité de l'aube.

De même, il peut être ménagé une deuxième zone de transition, non figurée, s'étendant dans la direction transverse entre la zone de raideur réduite 24 et la deuxième zone 25 et comprenant un taux volumique en deuxièmes fibres compris entre celui de la zone de raideur réduite 24 et celui de la deuxième zone 25, avec le même avantage que ci-dessus.

Dans un mode de réalisation, il est ménagé une première zone de transition et une deuxième zone de transition telle que définie ci-dessus.

Par exemple, le taux volumique en deuxièmes fibres d'une zone de transition peut être la moyenne arithmétique des taux volumiques en deuxièmes fibres des deux zones adjacentes.

Dans un mode de réalisation non illustré ici, il est possible que la zone de raideur réduite ne représente qu'une partie de l'épaisseur de la préforme, présente en peau de celle-ci. Dans un tel cas, et de manière similaire à ce qui vient d'être décrit pour la direction transverse, il peut être ménagé une zone de transition dans l'épaisseur de la préforme. Par exemple, dans un mode de réalisation, l'épaisseur comprise entre la surface de la préforme destinée à être le côté extrados de l'aube et une profondeur comprise entre 10 % et 30 % de l'épaisseur de la préforme peut comprendre un taux volumique en deuxième fibres conforme à celui de la zone de raideur réduite. Puis une deuxième épaisseur en contact avec la première et représentant entre 10 % et 30 % de l'épaisseur de la préforme, peut comprendre un taux volumique de deuxième fibres compris entre celui de la zone de raideur réduite 24 et celui de la première 23 ou de la deuxième zone 25. Le reste de l'épaisseur de la préforme, c'est-à-dire toute l'épaisseur de la préforme entre la surface destinée à être l'intrados et la deuxième épaisseur, peut comprendre un taux volumique de fibres conforme à la première 23 ou la deuxième zone 25.

Le tableau suivant donne des allongements à la rupture communs de plusieurs fibres pouvant être utilisées.

**[Table 1]**

| matériau des fibres - référence | allongement à la rupture (%) |
|---|---|
| verre - AGY « S-2 Glass^{®} » | 5,2 |
| verre - « E-Glass » | 4,4 |
| polyester | 3,5 |
| basalte | 3 |
| aramide - Dupont « Kevlar^{®} 49 » | 2,4 |
| carbone - Toray « HS T700 » | 2, 1 |
| carbone - Toray « HS TR30S » | 1,9 |
| carbone - Toray « HS T300 » | 1,5 |

Par exemple, on peut choisir du carbone pour les premières fibres et du verre pour les deuxièmes fibres. On peut aussi utiliser plusieurs types de fils ou torons de chaîne qui comprennent des fibres différentes ayant un allongement à la rupture supérieur à celui des premières fibres. On notera que le matériau des premières et deuxièmes fibres peut être identique. Par exemple, les premières et deuxièmes fibres peuvent être en carbone, à condition que leurs allongements à la rupture soient différents. Par exemple, on peut choisir des premières fibres de carbone en HexTow^{®} IM7 (commercialisé par la société Hexcel), et des deuxièmes fibres de carbone en Torayca^{®} T1100 (commercialisé par la société Toray).

L'allongement à la rupture des premières fibres peut être par exemple inférieur ou égal à 2,1 %, et celui des deuxièmes fibres supérieur ou égal à 2,4 %.

Comme figuré sur la figure 1, la géométrie de la zone de raideur réduite 24 peut être quelconque. En effet, comme défini ci-dessus, la zone de raideur réduite 24 permet de modifier les propriétés mécaniques de l'aube dans le domaine où une écaille pourrait se former. La géométrie de la zone de raideur réduite 24 peut donc être choisie en fonction de tests ou de simulations qui permettent d'identifier la zone la plus susceptible de former une écaille pour une texture fibreuse considérée.

Comme précisé ci-dessus, la zone de raideur réduite 24 s'étend dans une direction longitudinale à partir de la zone d'échasse et jusqu'à une hauteur inférieure ou égale à 30 % de la hauteur d'aube.

La figure 1 représente schématiquement le point 101 ayant une hauteur d'aube de 0 % et correspondant au bas de la veine aérodynamique de l'aube, et le point 102 ayant une hauteur d'aube de 100 % et correspondant au point le plus haut de l'aube dans la direction longitudinale D_{L}.

Dans le cas d'une zone de raideur 24 de géométrie quelconque, comme celle figurée en figure 1, la hauteur minimale de la zone de raideur réduite peut être comptée pour le point 104 le plus bas de celle-ci, et de même pour la hauteur maximale de la zone de raideur réduite comptée à partir de son point 103 le plus haut.

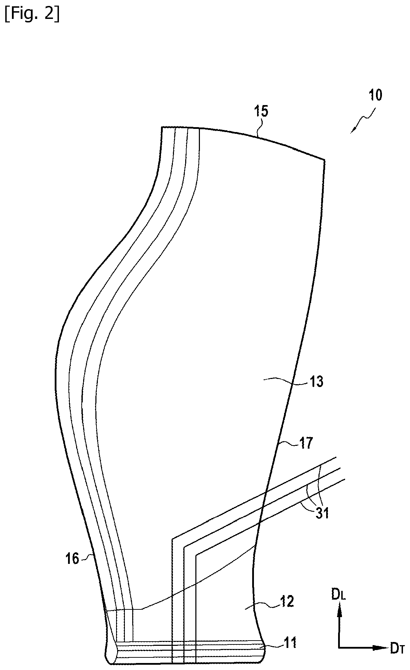

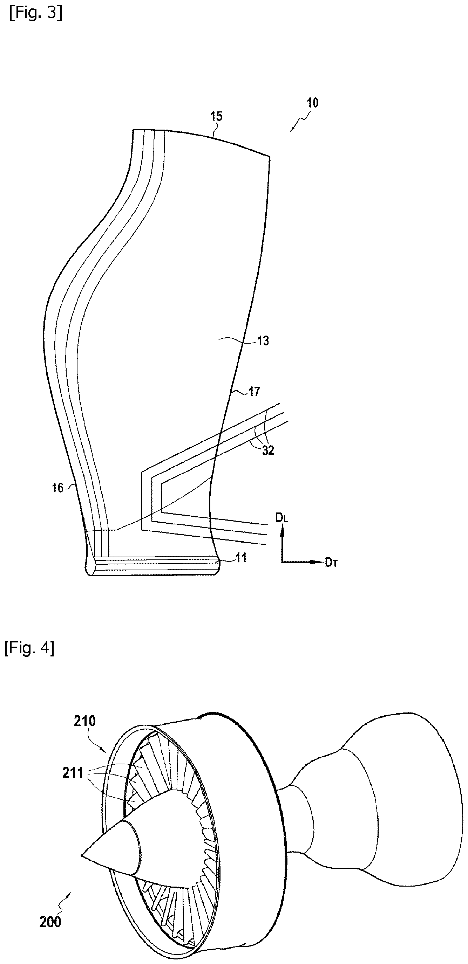

Les figures 2 et 3 représentent de manière schématique deux modes de réalisation de l'invention.

Pour des soucis de représentation, seuls certains des fils de chaînes 31 de deuxièmes fibres ont été représentés schématiquement en figures 2 et 3, pour aider à la compréhension des modes de réalisation représentés. L'invention ne doit pas être considérée comme limitée à ces modes de réalisation schématiques.

Dans le mode de réalisation représenté en figure 2, les fils ou torons de chaîne de deuxièmes fibres 31 sont introduites dès le début du tissage. Dans un tel cas, une partie du pied peut contenir des fils ou torons de chaîne en deuxièmes fibres 31. Il en résulte une texture plus simple à fabriquer puisqu'en effet, les fils ou torons de chaîne en deuxièmes fibres sont directement présents au moment du tissage du pied de l'aube 11 et, par conséquence, sont présent dès le tissage de la zone d'échasse 12. La zone de raideur réduite 24 peut ainsi s'étendre dans toute la zone d'échasse de l'aube 12 sans avoir besoin de retirer des fils ou torons de chaîne en premières fibres formant le pied de l'aube 11 pour en introduire de nouveaux en deuxièmes fibres.

Dans un autre mode de réalisation représenté en figure 3, les fils ou torons de chaîne en deuxièmes fibres peuvent être insérés dans la texture fibreuse au cours du tissage de celle-ci. De cette manière, il est possible de disposer d'une zone de raideur réduite qui n'est présente qu'à partir de la hauteur d'aube d'insertion choisie pour les fils ou torons de chaîne en deuxièmes fibres 32. En d'autres termes, il est possible de choisir précisément où commence la zone de raideur réduite 24 dans ce mode de réalisation.

Dans un mode de réalisation, tous les fils ou torons de chaîne de deuxièmes fibres insérés au cours du tissage de la préforme et compris dans la zone de raideur réduite 24 peuvent correspondre à des fils ou torons de chaîne introduits dans la texture fibreuse dans le but d'augmenter l'épaisseur de celle-ci. En effet, au cours du tissage d'une texture, le nombre de fils ou torons de chaînes peut varier en fonction de la hauteur d'aube, en particulier pour modifier l'épaisseur de la texture. Ainsi, des fils ou torons de chaînes doivent être introduits au cours du tissage de la texture pour augmenter son épaisseur et il est particulièrement avantageux d'introduire de la sorte les fils ou torons de chaîne de deuxièmes fibres, car il n'est alors pas nécessaire de retirer des fils ou torons de chaîne de premières fibres pour les remplacer par des fils ou torons de chaîne de deuxièmes fibres.

De manière analogue, des fils ou torons de chaînes peuvent être sortis de la texture fibreuse afin de faire diminuer l'épaisseur de celle-ci. Comme décrit ci-dessus, et comme représenté en figures 2 et 3, la hauteur maximale de la zone de raideur réduite 24 peut être choisie de sorte que les fils ou torons de chaîne de deuxièmes fibres qu'elle comprend correspondent à des fils de chaîne extraits de la préforme pour diminuer l'épaisseur de la texture fibreuse.

Dans ce mode de réalisation, il est possible de s'affranchir de toute opération de remplacement des fils ou torons de chaîne en deuxièmes fibres par des fils ou torons de chaîne en premières fibres à l'extrémité de la zone de raideur réduite 24.

Dans un mode de réalisation non figuré, il est possible que les fils ou torons de chaîne en deuxièmes fibres soient sortis de la texture fibreuse 10 à des hauteurs différentes afin de pouvoir contrôler l'épaisseur de la texture fibreuse 10 selon la direction transverse T.

Pour obtenir une aube de soufflante, on réalise une texture fibreuse 10 par tissage tridimensionnel, on met en forme ladite texture pour obtenir une préforme d'aube ayant la géométrie adaptée, par exemple pour obtenir une aube avec un bord de fuite déplacé vers l'amont, et on forme une matrice dans la porosité de la préforme pour obtenir l'aube. L'aube de soufflante peut être réalisée par un procédé de moulage par transfert de résine (RTM ou « Resin Transfer Molding ») où la préforme est placée dans un moule ayant la forme de l'aube et dans lequel une résine est injectée puis polymérisée. Dans ce contexte, la matrice peut être une matrice organique et obtenue à partir d'une résine de type époxy.

La figure 4 montre une turbomachine aéronautique 200. Une telle turbomachine 200 comprend une soufflante 210 disposée en entrée du moteur munie d'une pluralité d'aubes 211. Les aubes 211 sont ici en matériau composite présentant un renfort fibreux densifié par une matrice. De telles aubes 211 peuvent être obtenues à partir d'une texture fibreuse 10 selon l'invention par un procédé tel que celui décrit ci-avant.

## Revendications

1. Texture fibreuse (10) destinée à former le renfort fibreux d'une aube de turbomachine (211) en matériau composite comprenant un renfort fibreux densifié par une matrice, la texture fibreuse étant en une seule pièce et présentant un tissage tridimensionnel entre une pluralité de fils ou torons de chaîne en au moins des premières fibres présentant un premier allongement à la rupture et s'étendant selon une direction longitudinale (D_{L}) et une pluralité de fils ou torons de trame en premières fibres s'étendant selon une direction transverse (D_{T}), la texture comprenant selon la direction longitudinale une partie de pied d'aube (11), une partie de pale d'aube (13) et une partie d'échasse d'aube (12) entre la partie de pied d'aube et la partie de pale d'aube,
**caractérisée en ce qu'**elle comprend une zone de raideur réduite (24) comprenant des fils ou torons de chaîne en deuxièmes fibres présentant un deuxième allongement à la rupture supérieur au premier allongement à la rupture, la zone de raideur réduite s'étendant dans la direction longitudinale à partir de la zone d'échasse et jusqu'à une hauteur inférieure ou égale à 30 % de la hauteur de l'aube, la zone de raideur réduite s'étendant dans la direction transverse entre une première zone (23) et une deuxième zone (25), la première zone s'étendant sur une première longueur (21) à partir d'un premier bord (16) de la texture destiné à former un bord d'attaque, et la deuxième zone s'étendant sur une deuxième longueur (22) à partir d'un deuxième bord (17) de la texture destiné à former un bord de fuite.

2. Texture fibreuse selon la revendication 1, dans laquelle, la zone de raideur réduite a un taux volumique en deuxièmes fibres compris entre 25 % et 75 %.

3. Texture fibreuse selon la revendication 1 ou 2, dans laquelle, en dehors de la zone de raideur réduite, le taux volumique en premières fibres, est supérieur ou égal à 80 %.

4. Texture fibreuse selon l'une quelconque des revendications 1 à 3, dans laquelle, en dehors de la zone de raideur réduite, le taux volumique en deuxièmes fibres est inférieur ou égal à 20 %.

5. Texture fibreuse selon l'une quelconque des revendications 1 à 4, dans laquelle la première longueur est comprise entre 2 % et 10 % de la longueur de la préforme mesurée dans la direction transverse.

6. Texture fibreuse selon l'une quelconque des revendications 1 à 5, dans laquelle la deuxième longueur est comprise entre 2 % et 40 % de la longueur de la préforme mesurée dans la direction transverse.

7. Texture fibreuse selon l'une quelconque des revendications 1 à 6, dans laquelle le matériau des premières fibres est le carbone.

8. Texture fibreuse selon l'une quelconque des revendication 1 à 7, dans laquelle la zone de raideur réduite représente entre 10 % et 50 % de l'épaisseur de l'aube.

9. Aube de soufflante en matériau composite comprenant un renfort fibreux densifié par une matrice, le renfort fibreux de l'aube étant constitué par une texture fibreuse selon l'une quelconque des revendications 1 à 8.

10. Turbomachine aéronautique (200) comprenant une soufflante munie d'une pluralité d'aube de soufflante selon la revendication 9.

## Patentansprüche

1. Fasertextur (10), die dazu bestimmt ist, die Faserverstärkung einer Schaufel für eine Turbomaschine (211) aus Verbundmaterial zu bilden, das eine durch eine Matrix verdichtete Faserverstärkung umfasst, wobei die Fasertextur aus einem einzigen Stück besteht und eine dreidimensionale Verwebung aus mehreren Kettfäden oder -litzen aus zumindest ersten Fasern, die eine erste Bruchdehnung aufweisen und sich entlang einer Längsrichtung (D_{L}) erstrecken, und mehreren Schussfäden oder -litzen aus ersten Fasern aufweist, die sich entlang einer Querrichtung (D_{T}) erstrecken, wobei die Textur entlang der Längsrichtung einen Schaufelfußteil (11), einen Schaufelblattteil (13) und einen Schaufelstelzenteil (12) zwischen dem Schaufelfußteil und dem Schaufelblattteil umfasst,
**dadurch gekennzeichnet, dass** sie eine Zone mit verringerter Steifigkeit (24) umfassend Kettfäden oder -litzen aus zweiten Fasern umfasst, die eine zweite Bruchdehnung aufweisen, die höher ist als die erste Bruchdehnung, wobei die Zone mit verringerter Steifigkeit sich entlang der Längsrichtung ausgehend von der Stelzenzone und bis zu einer Höhe kleiner oder gleich 30 % der Höhe der Schaufel erstreckt, wobei die Zone mit verringerter Steifigkeit sich in der Querrichtung zwischen einer ersten Zone (23) und einer zweiten Zone (25) erstreckt, wobei die erste Zone sich über eine erste Länge (21) ausgehend von einem ersten Rand (16) der Textur erstreckt, der dazu bestimmt ist, eine Vorderkante zu bilden, und die zweite Zone sich über eine zweite Länge (22) ausgehend von einem zweiten Rand (17) der Textur erstreckt, der dazu bestimmt ist, eine Hinterkante zu bilden.

2. Fasertextur nach Anspruch 1, in welcher die Zone mit verringerter Steifigkeit eine Volumenanteil aus zweiten Fasern zwischen 25 % und 75 % aufweist.

3. Fasertextur nach Anspruch 1 oder 2, wobei außerhalb der Zone mit verringerter Steifigkeit der Volumenanteil aus ersten Fasern größer oder gleich 80 % ist.

4. Fasertextur nach einem der Ansprüche 1 bis 3, wobei außerhalb der Zone mit verringerter Steifigkeit der Volumenanteil aus zweiten Fasern kleiner oder gleich 20 % ist.

5. Fasertextur nach einem der Ansprüche 1 bis 4, wobei die erste Länge zwischen 2 % und 10 % der Länge der Vorform gemessen in der Querrichtung beträgt.

6. Fasertextur nach einem der Ansprüche 1 bis 5, wobei die zweite Länge zwischen 2 % und 40 % der Länge der Vorform gemessen in der Querrichtung beträgt.

7. Fasertextur nach einem der Ansprüche 1 bis 6, wobei das Material der ersten Fasern Kohlenstoff ist.

8. Fasertextur nach einem der Ansprüche 1 bis 7, wobei die Zone mit verringerter Steifigkeit zwischen 10 % und 50 % der Dicke der Schaufel darstellt.

9. Gebläseschaufel aus Verbundmaterial umfassend eine Faserverstärkung, die durch eine Matrix verdichtet ist, wobei die Faserverstärkung der Schaufel aus einer Fasertextur nach einem der Ansprüche 1 bis 8 gebildet wird.

10. Turbomaschine für ein Flugzeug (200), umfassend ein Gebläse, das mit mehreren Gebläseschaufeln nach Anspruch 9 versehen ist.

## Claims

1. A fibrous texture (10) intended to form the fibrous reinforcement of a turbomachine blade (211) made of composite material comprising a fibrous reinforcement densified by a matrix, the fibrous texture being in a single piece and having a three-dimensional weaving between a plurality of warp yarns or strands made of at least first fibers having a first elongation at break and extending in a longitudinal direction (D_{L}) and a plurality of weft yarns or strands made of first fibers extending in a transverse direction (D_{T}), the texture comprising in the longitudinal direction a blade root portion (11), a blade airfoil portion (13) and a blade stilt portion (12) between the blade root portion and the blade airfoil portion,
**characterized in that** it comprises an area of reduced stiffness (24) comprising warp yarns or strands made of second fibers having a second elongation at break greater than the first elongation at break, the area of reduced stiffness extending in the longitudinal direction from the stilt area and up to a height less than or equal to 30% of the height of the blade, the area of reduced stiffness extending in the transverse direction between a first area (23) and a second area (25), the first area extending over a first length (21) from a first edge (16) of the texture intended to form a leading edge, and the second area extending over a second length (22) from a second edge (17) of the texture intended to form a trailing edge.

2. The fibrous texture according to claim 1, wherein the area of reduced stiffness has a volume rate of second fibers comprised between 25% and 75%.

3. The fibrous texture according to claim 1 or 2, wherein, outside the area of reduced stiffness, the volume rate of first fibers is greater than or equal to 80%.

4. The fibrous texture according to any one of claims 1 to 3, wherein, outside the area of reduced stiffness, the volume rate of second fibers is less than or equal to 20%.

5. The fibrous texture according to any one of claims 1 to 4, wherein the first length is comprised between 2% and 10% of the length of the preform measured in the transverse direction.

6. The fibrous texture according to any one of claims 1 to 5, wherein the second length is comprised between 2% and 40% of the length of the preform measured in the transverse direction.

7. The fibrous texture according to any one of claims 1 to 6, wherein the material of the first fibers is carbon.

8. The fibrous texture according to any one of claims 1 to 7, wherein the area of reduced thickness represents between 10% and 50% of the thickness of the blade.

9. A fan blade made of composite material comprising a fibrous reinforcement densified by a matrix, the fibrous reinforcement of the blade consisting of a fibrous texture according to any one of claims 1 to 8.

10. An aeronautical turbomachine (200) comprising a fan provided with a plurality of fan blades according to claim 9.
